# EUROPEAN PATENT APPLICATION

(11) **EP 3 525 443 A1**
(43) Date of publication of application: **14.08.2019**
(21) Application number: 17857784.7
(22) Date of filing: 17.07.2017
(51) Int. Cl.: H04N 5/225

(54) **CAMERA LENS AND VIDEO CAMERA**

(30) Priority: 08.10.2016 CN 201610878312
(71) Applicant: Hangzhou Hikvision Digital Technology Co., Ltd., Hangzhou, Zhejiang 310051 (CN)
(72) Inventor: LIU, Chao, Hangzhou Zhejiang 310051 (CN); YANG, Kun, Hangzhou Zhejiang 310051 (CN); WANG, Wei, Hangzhou Zhejiang 310051 (CN); CHEN, Yanting, Hangzhou Zhejiang 310051 (CN); XU, Jianjun, Hangzhou Zhejiang 310051 (CN)
(74) Representative: IPAZ
(86) International application number: PCT/CN2017/093128
(87) International publication number: WO 2018/064903

(57) **Abstract**

Embodiments of the present application disclose a camera lens and a camera. The camera lens is provided with a beam splitting device for splitting the incident light into visible light and near-infrared light. The camera lens is further provided with a group of variable magnification lenses and a group of compensation lenses, so that the zoom and aberration correction are achieved. The camera is provided with the camera lens for splitting the visible light and the infrared light. The camera is further provided with a visible light acquisition module for acquiring the visible light exiting from the camera lens and converting the visible light into a color signal and a first brightness signal. The camera is further provided with a near-infrared light acquisition module for acquiring the near-infrared light exiting from the camera lens and converting the near-infrared light into a second brightness signal. The camera is further provided with a fusion module for fusing the color signal, the first brightness signal and the second brightness signal and outputting a fused image. It can be seen that the camera provided by the solution separately processes and then fuses the visible light and the near-infrared light, thereby avoiding color cast during the mixture of them and outputting a color image under a low illumination scene.

## Description

The present application claims the priority to a Chinese Patent Application No. 201610878312.1, filed with the China National Intellectual Property Administration on October 8, 2016 and entitled "Camera lens and Camera", which is incorporated into the present application by reference in its entirety.

### TECHNICAL FIELD

The present application relates to the technical field of an optical device, and in particular, to a camera lens and a camera.

### BACKGROUND

A low illumination camera is a surveillance camera that can still capture clear images under lower illumination conditions. The low illumination camera has been widely used in field of security surveillance.

At present, most low illumination cameras need to use an infrared lamp to fill light in a low illumination scene, which may improve the brightness of the scene. However, after filling light by the infrared lamp, the light acquired by the camera has both visible light and near-infrared light. The wavelengths of the visible light and near-infrared light are quite different. If the visible light and the near-infrared light are mixed together, there will be severe color cast in the acquired image. Therefore, the low illumination camera adopting such solution can only output an back and white image.

### SUMMARY

The objectives of the embodiments of the present application is to provide a camera lens for splitting the visible light and the infrared light, and to provide a camera for outputting a color-mode image in a low illumination scene.

To achieve the above-described objective, an embodiment of the present application discloses a camera lens, including a group of variable magnification lenses, a group of compensation lenses and a beam splitting device, or, a group of compensation lenses sequentially arranged, a group of variable magnification lenses and a beam splitting device sequentially arranged; wherein,
the group of variable magnification lenses has a negative focal power and is configured for diverging light incident from outside;
the group of compensation lenses has a positive focal power and is configured for converging light exiting from the group of variable magnification lenses; and
the beam splitting device is configured for splitting the light exiting from the group of compensation lenses into visible light and near-infrared light.

Optionally, a first group of fixed lenses is further disposed between the group of variable magnification lenses and the group of compensation lenses, and has a positive focal power;
in the case where the camera lens includes the group of variable magnification lenses, the group of compensation lenses and the beam splitting device sequentially arranged, the first group of fixed lenses is configured for converging the light exiting from the group of variable magnification lenses, and the converged light is incident into the group of compensation lenses;
in the case where the camera lens includes the group of compensation lenses, the group of variable magnification lenses and the beam splitting device sequentially arranged, the first group of fixed lenses is configured for converging the light exiting from the group of compensation lenses, and the converged light is incident into the group of variable magnification lenses.

Optionally, a second group of fixed lenses is further disposed before the group of variable magnification lenses and has a positive focal power; a third group of fixed lenses is further disposed before the group of compensation lenses and has a positive focal power;
in the case where the camera lens includes the group of variable magnification lenses, the group of compensation lenses and the beam splitting device sequentially arranged:
the second group of fixed lenses is configured for converging the light incident from outside, and the converged light is incident into the group of variable magnification lenses;
the third group of fixed lenses is configured for converging the light exiting from the group of variable magnification lenses, and the converged light is incident into the group of compensation lenses;
in the case where the camera lens includes the group of compensation lenses, the group of variable magnification lenses and the beam splitting device sequentially arranged:
   the second group of fixed lenses is configured for converging the light exiting from the group of compensation lenses, and the converged light is incident into the group of variable magnification lenses;
   the third group of fixed lenses is configured for converging the light incident from outside, and the converged light is incident into the group of compensation lenses.

Optionally, the beam splitting device is a beam splitting prism or a beam splitting filter;
the beam splitting prism includes a first sub-prism and a second sub-prism; wherein, the first sub-prism and the second sub-prism are right-angled prisms, a first inclined surface of the first sub-prism is opposite to a second inclined surface of the second sub-prism, and a beam splitting film is disposed between the first inclined surface and the second inclined surface;
the light exiting from the group of compensation lenses is incident into the first sub-prism through a first right-angle surface, and is split into the visible light and the near-infrared light after passing through the beam splitting film; the near-infrared light exits from the first sub-prism through a second right-angle surface, and the visible light exits from the second sub-prism through a third right-angle surface; or, the visible light exits from the first sub-prism through the second right-angle surface, and the near-infrared light exits from the second sub-prism through the third right-angle surface.

Optionally, in the case where the beam splitting device is a beam splitting prism, the near-infrared light exits from the first sub-prism through the second right-angle surface, and the visible light exits from the second sub-prism through the third right-angle surface,
a first anti-reflection film is further disposed on the first right-angle surface; the light exiting from the group of compensation lenses is transmitted through the first anti-reflection film, and is incident into the first sub-prism through the first right-angle surface;
and/or, a second anti-reflection film is further disposed on the second right-angle surface; the near-infrared light is transmitted through the second anti-reflection film, and exits from the first sub-prism through the second right-angle surface;
and/or, a third anti-reflection film is further disposed on the third right-angle surface; the visible light is transmitted through the third anti-reflection film, and exits from the second sub-prism through the third right-angle surface;
in the case where the beam splitting device is a beam splitting prism, the near-infrared light exits from the first sub-prism through the second right-angle surface, and the visible light exits from the second sub-prism through the third right-angle surface,
a first anti-reflection film is further disposed on the first right-angle surface; the light exiting from the group of compensation lenses is transmitted through the first anti-reflection film, and is incident into the first sub-prism through the first right-angle surface;
and/or, a third anti-reflection film is further disposed on the second right-angle surface; the visible light is transmitted through the third anti-reflection film, and exits from the first sub-prism through the second right-angle surface;
and/or, a second anti-reflection film is further disposed on the third right-angle surface; the near-infrared light is transmitted through the second anti-reflection film, and exits from the second sub-prism through the third right-angle surface.

Optionally, the beam splitting device is a beam splitting prism, the beam splitting prism includes a third sub-prism and a fourth sub-prism; wherein, the third sub-prism is a non-right-angled prism, the fourth sub-prism is a right-angled prism or a non-right-angled prism, and a beam splitting film is disposed between the opposite surfaces of the third sub-prism and the fourth sub-prism.

Optionally, the camera lens is further provided with a first interface and a second interface; the split near-infrared light exits from the camera lens through the first interface, and the split visible light exits from the camera lens through the second interface; or, the visible light exits from the camera lens through the first interface, and the near-infrared light exits from the camera lens through the second interface.

To achieve the above-described objective, an embodiment of the present application further discloses a camera, including: a camera lens described in the embodiment of the present application, a visible light acquisition module, a near-infrared light acquisition module and a fusion module; wherein,
the camera lens is configured for splitting mixed light into visible light and near-infrared light; wherein, the near-infrared light is emitted by an infrared fill lamp;
the visible light acquisition module is configured for acquiring the visible light exiting from the camera lens; the visible light acquisition module includes a first photosensitive chip, which converts the visible light into a color signal and a first brightness signal;
the near-infrared light acquisition module is configured for acquiring the near-infrared light exiting from the camera lens; the near-infrared light acquisition module includes a second photosensitive chip, which converts the near-infrared light into a second brightness signal; and
the fusion module is configured for fusing the color signal, the first brightness signal and the second brightness signal and outputting a fused image.

Optionally, the infrared fill lamp is disposed in the camera, and a sensor switch is disposed in the infrared fill lamp; when an intensity of the visible light in a scene is lower than a preset threshold or when a preset period is reached, the sensor switch is closed and the infrared fill lamp emits the near-infrared light.

Optionally, the spectral center wavelength of the near-infrared light emitted by the infrared fill lamp is 850 nm, 780 nm or 730 nm.

The camera lens provided by this solution is provided with a beam splitting device, which may split the incident light into the visible light and the near-infrared light. In addition, before the light is incident into the beam splitting device, the light passes through the group of variable magnification lenses and the group of compensation lenses, so that the zoom and aberration correction can be achieved.

The solution further provides a camera. The camera lens is disposed in the camera, and the separation of the visible light and the infrared light may be realized. The camera is further provided with a visible light acquisition module for acquiring the visible light exiting from the camera lens and converting the visible light into a color signal and a first brightness signal. The camera is further provided with a near-infrared light acquisition module for acquiring the near-infrared light exiting from the camera lens and converting the near-infrared light into a second brightness signal. The camera is further provided with a fusion module for fusing the color signal, the first brightness signal and the second brightness signal and outputting a fused image. It can be seen that the camera provided by the solution separately processes and then fuses the visible light and the near-infrared light, thereby avoiding color cast during the mixture of the visible light and the near-infrared light. Therefore, a color image may be output under a low illumination scene.

Of course, any one of the products or methods implementing the present application is not necessarily required to achieve all of the advantages described above at the same time.

### BRIEF DESCRIPTION OF THE DRAWINGS

In order to more clearly describe the technical solutions of the embodiments of the present application and the prior art, drawings that need to be used in embodiments and the prior art will be briefly described below. Obviously, the drawings described below are for only some embodiments of the present application, and those skilled in the art can also obtain other drawings based on these drawings without any creative efforts.
FIG. 1 shows a first schematic structural diagram of a camera lens provided by an embodiment of the present application.
FIG. 2 shows a first schematic structural diagram of a beam splitting device in a camera lens provided by an embodiment of the present application.
FIG. 3 shows a second schematic structural diagram of a camera lens provided by an embodiment of the present application.
FIG. 4 shows a third schematic structural diagram of a camera lens provided by an embodiment of the present application.
FIG. 5 shows a fourth schematic structural diagram of a camera lens provided by an embodiment of the present application.
FIG. 6 shows a fifth schematic structural diagram of a camera lens provided by an embodiment of the present application.
FIG. 7 shows a sixth schematic structural diagram of a camera lens provided by an embodiment of the present application.
FIG. 8 shows a seventh schematic structural diagram of a camera lens provided by an embodiment of the present application.
FIG. 9 shows an eighth schematic structural diagram of a camera lens provided by an embodiment of the present application.
FIG. 10 shows a ninth schematic structural diagram of a camera lens provided by an embodiment of the present application.
FIG. 11 shows a tenth schematic structural diagram of a camera lens provided by an embodiment of the present application.
FIG. 12 shows a second schematic structural diagram of a beam splitting device in a camera lens provided by an embodiment of the present application.
FIG. 13 shows a third schematic structural diagram of a beam splitting device in a camera lens provided by an embodiment of the present application.
Fig. 14 shows a schematic structural diagram of a camera provided by an embodiment of the present application.

### DETAILED DESCRIPTION

In order to make the objectives, technical solutions, and advantages of the present application clearer and more understandable, the present application will be described in more detail below with reference to the appended drawings and embodiments. Obviously, the described embodiments are only some, rather than all, of the embodiments of the present application. All other embodiments obtained based on the embodiments of the present application by those skilled in the art without any creative efforts fall into the protection scope of the present application.

In order to solve the above-described technical problem, the embodiments of the present application provide a camera lens and a camera. The camera lens provided by an embodiment of the present application is described firstly in detail below.

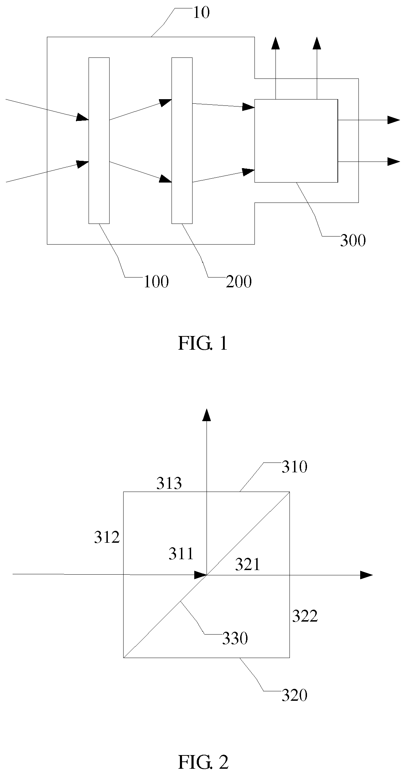

FIG. 1 shows a first schematic structural diagram of a camera lens provided by the embodiment of the present application. The camera lens 10 includes a group of variable magnification lenses 100, a group of compensation lenses 200 and a beam splitting device 300 sequentially arranged. Wherein,
the group of variable magnification lenses 100 has a negative focal power and is configured for diverging the light incident from outside;
the group of compensation lenses 200 has a positive focal power and is configured for converging the light exiting from the group of variable magnification lenses 100;
the beam splitting device 300 is configured for splitting the light exiting from the group of compensation lenses 200 into visible light and near-infrared light.

Each group of lenses described in the embodiment of the present application may include one or more lenses.

As shown by the arrows in FIG. 1, the light is incident from outside into the group of variable magnification lenses 100, which diverges and transmits the light. The transmitted light is incident into the group of compensation lenses 200, which converges and transmits the light. The transmitted light is incident into the beam splitting device, which splits the light into visible light and near-infrared light. By the cooperation of the group of variable magnification lenses 100 and the group of compensation lenses 200, the zoom with small magnification can be achieved, and the zoom process has the same effect on the visible light and the near-infrared light.

It should be noted that the direction of the optical path in FIG. 1 is illustrative only and does not represent an accurate light path.

The beam splitting device 300 may be a beam splitting prism or a beam splitting filter. If the beam splitting device is a beam splitting prism, the beam splitting device 300 may include a first sub-prism 310 and a second sub-prism 320 as shown in FIG. 2. Wherein, the first sub-prism 310 and the second sub-prism 320 are right-angled prisms, the first inclined surface 311 of the first sub-prism 310 is opposite to the second inclined surface 321 of the second sub-prism 320, and a beam splitting film 330 is disposed between the first inclined surface 311 and the second inclined surface 321.

In the first implementation corresponding to FIG. 2, as shown by the arrows in FIG. 2, the light exiting from the group of compensation lenses is incident into the first sub-prism 310 through the first right-angle surface 312, and is split into visible light and near-infrared light after passing through the beam splitting film 330. The near-infrared light exits from the first sub-prism 310 through the second right-angle surface 313, and the visible light exits from the second sub-prism 320 through the third right-angle surface 322.

Specifically, the wavelength of the light transmitted through the beam splitting film may range from 440 nm to (λ-20) nm; the wavelength of the light reflected by the beam splitting film may range from (λ+20) nm to 900 nm; wherein, λ is 550<λ<730.

As an implementation, in a case where the beam splitting device is a beam splitting prism, a first anti-reflection film may further be disposed on the first right-angle surface 312. The light exiting from the group of compensation lenses 200 is transmitted through the first anti-reflection film, and is into the first sub-prism 310 through the first right-angle surface 312. Specifically, the wavelength of the light which can be transmitted through the first anti-reflection film may range from 400 nm to 900 nm, so that the first anti-reflection film may transmit the near-infrared light and the visible light.

As an implementation, a second anti-reflection film may further be disposed on the second right-angle surface 313. The near-infrared light is transmitted through the second anti-reflection film, and exits from the first sub-prism 310 through the second right-angle surface 313. Specifically, the wavelength of the light which can be transmitted through the second anti-reflection film may range from λ nm to 900 nm, so that the second anti-reflection film may transmit the near-infrared light.

As an implementation, a third anti-reflection film is further disposed on the third right-angle surface 322. The visible light is transmitted through the third anti-reflection film, and exits from the second sub-prism 320 through the third right-angle surface 322. Specifically, the wavelength of the light which can be transmitted through the third anti-reflection film may range from 400 nm to λ nm, so that the third anti-reflection film may transmit the visible light.

In the second implementation corresponding to FIG. 2, with the provision of the beam splitting film, the visible light can exit from the first sub-prism 310 through the second right-angle surface 313 and the near-infrared light can exit from the second sub-prism 320 through the third right-angle surface 322. In this case, the wavelength of the light reflected by the beam splitting film may range from 440 nm to (λ-20) nm; the wavelength of the light reflected by the beam splitting film may range from (λ+20) nm to 900 nm; wherein, λ is 550<λ<730.

In this implementation, in a case where the beam splitting device is a beam splitting prism, a first anti-reflection film may further be disposed on the first right-angle surface 312. The light exiting from the group of compensation lenses 200 is transmitted through the first anti-reflection film, and is incident into the first sub-prism 310 through the first right-angle surface 312. Specifically, the wavelength of the light which can be transmitted through the first anti-reflection film may range from 400 nm to 900 nm, so that the first anti-reflection film may transmit the near-infrared light and the visible light.

A third anti-reflection film may further be disposed on the second right-angle surface 313. The visible light is transmitted through the third anti-reflection film, and exits from the first sub-prism 310 through the second right-angle surface 313. Specifically, the wavelength of the light which can be transmitted through the third anti-reflection film may range from 400 nm to λ nm, so that the third anti-reflection film may transmit the visible light. Or, the visible light is transmitted through the second anti-reflection film, and exits from the first sub-prism 310 through the second right-angle surface 313.

A second anti-reflection film may further be disposed on the third right-angle surface 322. The near-infrared light is transmitted through the second anti-reflection film, and exits from the second sub-prism 320 through the third right-angle surface 322. Specifically, the wavelength of the light which can be transmitted through the second anti-reflection film may range from λ nm to 900 nm, so that the second anti-reflection film may transmit the near-infrared light.

For the selection of the anti-reflection film, the average transmittance (Tave) for each of the first, second and third anti-reflection films may be greater than 90%.

It should be noted that the direction of the optical path in FIG. 2 is illustrative only and does not represent an accurate light path.

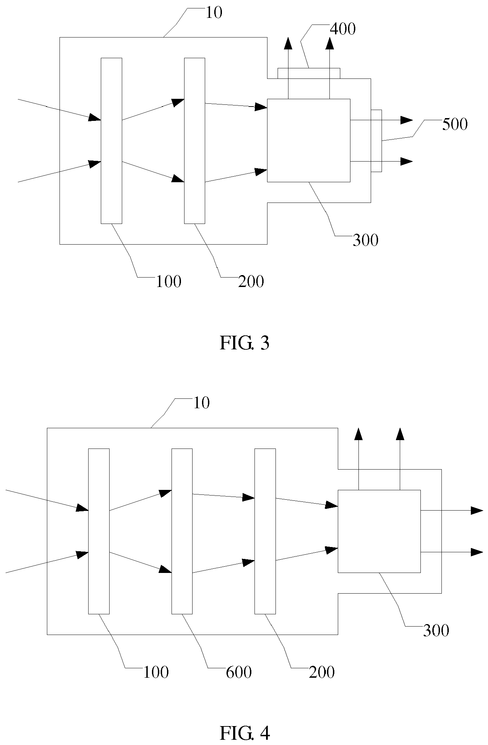

As shown in FIG. 3, the camera lens 10 may further be provided with a first interface 400 and a second interface 500. In the first embodiment corresponding to FIG. 2, the split near-infrared light exits from the camera lens 10 through the first interface 400, and the split visible light exits from the camera lens 10 through the second interface 500. In the second embodiment corresponding to FIG.2, the split visible light exits from the camera lens 10 through the first interface 400, and the split near-infrared light exits from the camera lens 10 through the second interface 500.

As an implementation, as shown in FIG. 4, a first group of fixed lenses 600 may further be disposed between the group of variable magnification lenses 100 and the group of compensation lenses 200. The first group of fixed lenses 600 has a positive focal power and is configured for converging the light exiting from the group of variable magnification lenses 100, and the converged light is incident into the group of compensation lenses 200.

As shown by the arrows in FIG. 4, the light is incident from outside into the group of variable magnification lenses 100, which diverges and transmits the light. The transmitted light is incident into the first group of fixed lenses 600, which converges the light. The converged light is incident into the group of compensation lenses 200, which converges and transmits the light. The transmitted light is incident into the beam splitting device, which splits the light into visible light and near-infrared light.

The first group of fixed lenses 600 may correct partial aberration and may also function to correct the direction of light in different fields of view of the object side. During the zoom process, the first group of fixed lenses 600 remains stationary.

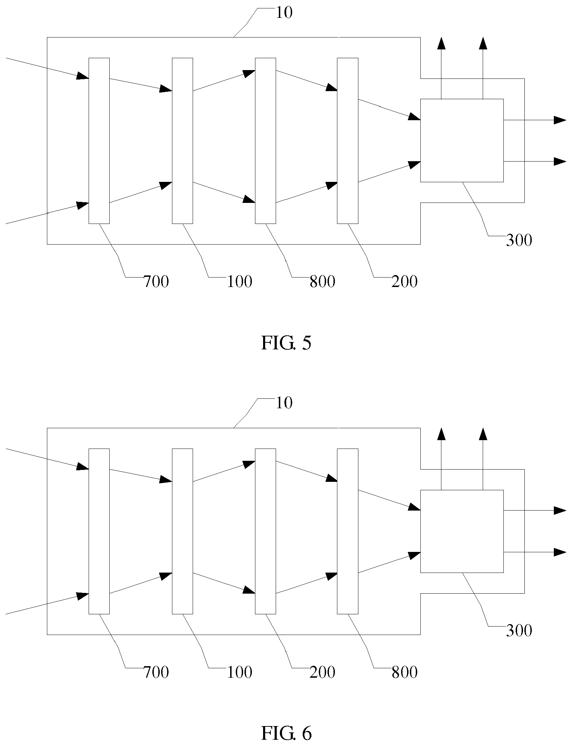

As an implementation, as shown in FIG. 5, a second group of fixed lenses 700 may further be disposed before the group of variable magnification lenses 100. The second group of fixed lenses 700 has a positive focal power and is configured for converging the light incident from outside, and the converged light is incident into the group of variable magnification lenses 100.

The second group of fixed lenses 700 mainly functions to correct aberration. During the zoom process, the second group of fixed lens 700 remains stationary.

In FIG. 5, a third group of fixed lenses 800 may further be disposed before the group of compensation lenses 200. The third group of fixed lenses 800 has a positive focal power and is configured for converging the light exiting from the group of variable magnification lenses 100, and the converged light is incident into the group of compensation lenses 200.

The third group of fixed lenses 800 mainly functions to correct aberration. During the zoom process, the third group of fixed camera lens 800 remains stationary.

Of course, as shown in FIG. 6, the second group of fixed lenses 700 may further be disposed before the group of variable magnification lenses 100, and the third group of fixed lenses 800 may further be disposed after the group of compensation lenses 200. This will correct the aberration to a greater extent.

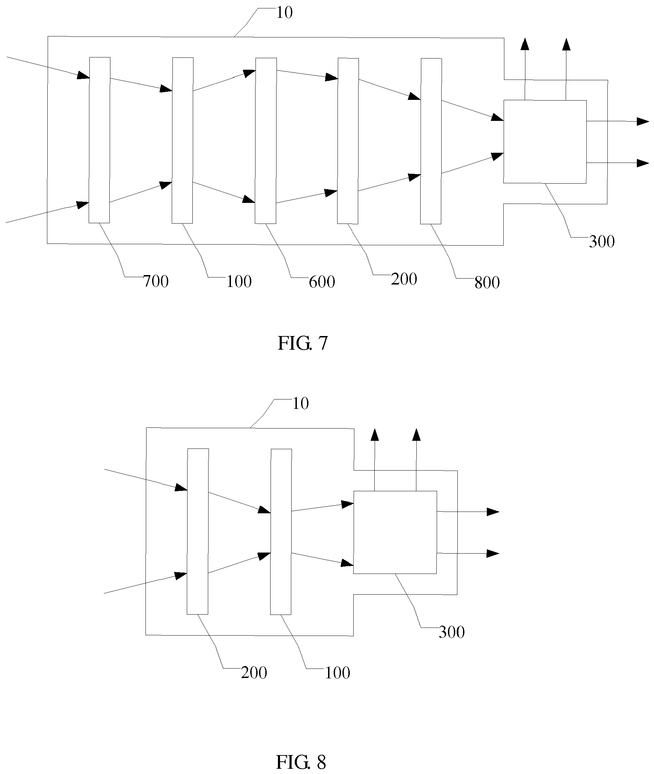

As shown in Fig. 7, it is also possible to dispose a first group of fixed lenses 600 between the group of variable magnification lenses 100 and the group of compensation lenses 200, dispose a second group of fixed lenses 700 before the group of variable magnification lenses 100, and dispose a third group of fixed lenses 800 after the group of compensation lenses 200. In this way, this not only may function to correct the direction of light in different fields of view of the object side, but also correct the aberration to a greater extent.

It should be noted that the direction of the optical path in FIGS. 3-7 is illustrative only and does not represent an accurate light path.

The camera lens with a beam splitting device in this solution can split the incident light into visible light and near-infrared light. In addition, the light passes through the group of variable magnification lenses and the group of compensation lenses before it was incident into the beam splitting device, so that the zoom and aberration correction can be achieved.

FIG. 8 shows an eighth schematic structural diagram of a camera lens provided by the embodiment of the present application. The camera lens 10 includes a group of compensation lenses 200, a group of variable magnification lenses 100 and a beam splitting device 300 sequentially arranged. Wherein,
the group of variable magnification lenses 100 has a negative focal power and is configured for diverging the light incident from outside;
the group of compensation lenses 200 has a positive focal power and is configured for converging the light exiting from the group of variable magnification lenses 100;
the beam splitting device 300 is configured for splitting the light exiting from the group of compensation lenses 200 into visible light and near-infrared light.

Each group of lenses described in the embodiment of the present application may include one or more lenses.

As shown by the arrows in FIG. 8, the light is incident from outside into the group of compensation lenses 200, which converges and transmits the light. The transmitted light is incident into the group of variable magnification lenses 100, which diverges and transmits the light. The transmitted light is incident into the beam splitting device, which splits the light into the visible light and the near-infrared light. By the cooperation of the group of variable magnification lenses 100 and the group of compensation lenses 200, the zoom with small magnification can be achieved, and the zoom process has the same effect on the visible light and the near-infrared light.

It should be noted that the direction of the optical path in FIG. 8 is illustrative only and does not represent an accurate light path.

The beam splitting device 300 may be a beam splitting prism or a beam splitting filter. If the beam splitting device is a beam splitting prism, the beam splitting device 300 may include a first sub-prism 310 and a second sub-prism 320 as shown in FIG. 2. Wherein, the first sub-prism 310 and the second sub-prism 320 are right-angled prisms, the first inclined surface 311 of the first sub-prism 310 is opposite to the second inclined surface 321 of the second sub-prism 320, and a beam splitting film 330 is disposed between the first inclined surface 311 and the second inclined surface 321.

In the first implementation corresponding to FIG. 2, as shown by the arrows in FIG. 2, the light exiting from the group of compensation lenses is incident into the first sub-prism 310 through the first right-angle surface 312. The light passes through the beam splitting film 330, and is split into the visible light and the near-infrared light. The near-infrared light exits from the first sub-prism 310 through the second right-angle surface 313, and the visible light exits from the second sub-prism 320 through the third right-angle surface 322. Or, the visible light exits from the first sub-prism 310 through the second right-angle surface 313, and the near-infrared light exits from the second sub-prism 320 through the third right-angle surface 322.

Specifically, the wavelength of the light transmitted through the beam splitting film may range from 440 nm to (λ-20) nm; the wavelength of the light reflected by the beam splitting film may range from (λ+20) nm to 900 nm; wherein, λ is 550<λ<730.

As an implementation, in a case where the beam splitting device is a beam splitting prism, a first anti-reflection film may further be disposed on the first right-angle surface 312. The light exiting from the group of compensation lenses 200 is transmitted through the first anti-reflection film, and is incident into the first sub-prism 310 through the first right-angle surface 312. Specifically, the wavelength of the light which can be transmitted through the first anti-reflection film may range from 400 nm to 900 nm, so that the first anti-reflection film may transmit the near-infrared light and the visible light.

As an implementation, a second anti-reflection film may further be disposed on the second right-angle surface 313. The near-infrared light is transmitted through the second anti-reflection film, and exits from the first sub-prism 310 through the second right-angle surface 313. Specifically, the wavelength of the light which can be transmitted through the second anti-reflection film may range from λ nm to 900 nm, so that the second anti-reflection film may transmit the near-infrared light. Or, the visible light is transmitted through the second anti-reflection film, and exits from the first sub-prism 310 through the second right-angle surface 313. Specifically, the wavelength of the light which can be transmitted through the second anti-reflection film may range from 400 nm to λ nm, so that the second anti-reflection film may transmit the visible light.

As an implementation, a third anti-reflection film is further disposed on the third right-angle surface 322. The visible light is transmitted through the third anti-reflection film, and exits from the second sub-prism 320 through the third right-angle surface 322. Specifically, the wavelength of the light which can be transmitted through the third anti-reflection film may range from 400 nm to λ nm, so that the third anti-reflection film may transmit the visible light. Or, the near-infrared light is transmitted through the third anti-reflection film, and exits from the second sub-prism 320 through the third right-angle surface 322. Specifically, the wavelength of the light which can be transmitted through the third anti-reflection film may range from λ nm to 900 nm, so that the third anti-reflection film may transmit the near-infrared light.

In the second implementation corresponding to FIG. 2, with the provision of the beam splitting film, the visible light can exit from the first sub-prism 310 through the second right-angle surface 313 and the near-infrared light can exit from the second sub-prism 320 through the third right-angle surface 322. In this case, the wavelength of the light reflected by the beam splitting film may range from 440 nm to (λ-20) nm; the wavelength of the light reflected by the beam splitting film may range from (λ+20) nm to 900 nm; wherein, λ is 550<λ<730.

In this implementation, in a case where the beam splitting device is a beam splitting prism, a first anti-reflection film may further be disposed on the first right-angle surface 312. The light exiting from the group of compensation lenses 200 is transmitted through the first anti-reflection film, and is incident into the first sub-prism 310 through the first right-angle surface 312. Specifically, the wavelength of the light which can be transmitted through the first anti-reflection film may range from 400 nm to 900 nm, so that the first anti-reflection film may transmit the near-infrared light and the visible light.

A third anti-reflection film may further be disposed on the second right-angle surface 313. The visible light is transmitted through the third anti-reflection film, and exits from the first sub-prism 310 through the second right-angle surface 313. Specifically, the wavelength of the light which can be transmitted through the third anti-reflection film may range from 400 nm to λ nm, so that the third anti-reflection film may transmit the visible light. Or, the visible light is transmitted through the second anti-reflection film, and exits from the first sub-prism 310 through the second right-angle surface 313.

A second anti-reflection film may further be disposed on the third right-angle surface 322. The near-infrared light is transmitted through the second anti-reflection film, and exits from the second sub-prism 320 through the third right-angle surface 322. Specifically, the wavelength of the light which can be transmitted through the second anti-reflection film may range from λ nm to 900 nm, so that the second anti-reflection film may transmit the near-infrared light.

For the selection of the anti-reflection film, the average transmittance (Tave) for each of the first, second and third anti-reflection films may be greater than 90%.

It should be noted that the direction of the optical path in FIG. 2 is illustrative only and does not represent an accurate light path.

As shown in FIG. 3, the camera lens 10 may further be provided with a first interface 400 and a second interface 500. In the first embodiment corresponding to FIG. 2, the split near-infrared light exits from the camera lens 10 through the first interface 400, and the split visible light exits from the camera lens 10 through the second interface 500. In the second embodiment corresponding to FIG.2, the split visible light exits from the camera lens 10 through the first interface 400, and the split near-infrared light exits from the camera lens 10 through the second interface 500.

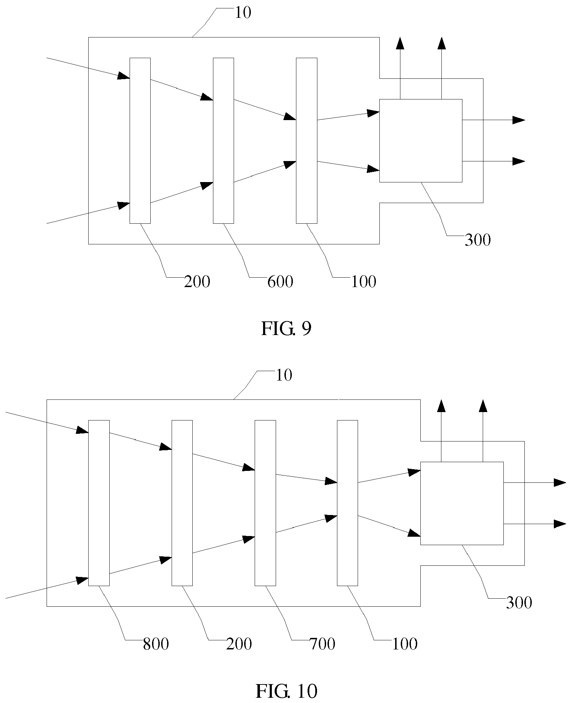

As an implementation, as shown in FIG. 9, a first group of fixed lenses 600 may further be disposed between the group of variable magnification lenses 100 and the group of compensation lenses 200. The first group of fixed lenses 600 has a positive focal power and is configured for converging the light exiting from the group of variable magnification lenses 100, and the converged light is incident into the group of compensation lenses 200.

As shown by the arrows in FIG. 9, the light is incident from outside into the group of compensation lenses 200, which converges and transmits the light. The transmitted light is incident into the first group of fixed lenses 600, which converges the light. The converged light is incident into the group of variable magnification lenses 100, which diverges and transmits the light. The transmitted light is incident into the beam splitting device, which splits the light into the visible light and the near-infrared light.

The first group of fixed lenses 600 may correct partial aberration and may also function to correct the direction of light in different fields of view of the object side. During the zoom process, the first group of fixed lenses 600 remains stationary.

As an implementation, as shown in FIG. 10, a second group of fixed lenses 700 may further be disposed before the group of variable magnification lenses 100. The second group of fixed lenses 700 has a positive focal power and is configured for converging the light incident from outside, and the converged light is incident into the group of variable magnification lenses 100.

The second group of fixed lenses 700 mainly functions to correct aberration. During the zoom process, the second group of fixed lens 700 remains stationary.

In FIG. 10, a third group of fixed lenses 800 may further be disposed before the group of compensation lenses 200. The third group of fixed lenses 800 has a positive focal power and is configured for converging the light exiting from the group of variable magnification lenses 100, and the converged light is incident into the group of compensation lenses 200.

The third group of fixed lenses 800 mainly functions to correct aberration. During the zoom process, the third group of fixed camera lens 800 remains stationary.

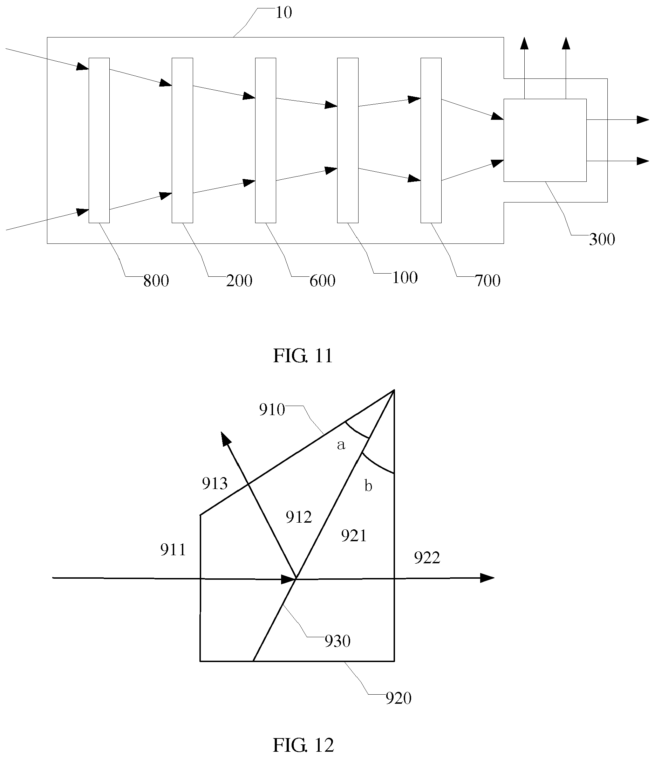

Of course, as shown in FIG. 11, it is also possible to dispose a first group of fixed lenses 600 between the group of variable magnification lenses 100 and the group of compensation lenses 200, dispose a second group of fixed lenses 700 after the group of variable magnification lenses 100, and dispose a third group of fixed lenses 800 before the group of compensation lenses 200. In this way, this not only may function to correct the direction of light in different fields of view of the object side, but also correct the aberration to a greater extent.

It should be noted that the direction of the optical path in FIG. 8-11 is illustrative only and does not represent an accurate light path.

It should be emphasized that, in the camera lens provided by this embodiment, when the beam splitting device is a beam splitting prism, it may be a right-angled prism or a non-right-angled prism, which is not specifically limited.

As an implementation, the beam splitting prism may include a third sub-prism 910 and a fourth sub-prism 920 as shown in FIG. 12. Wherein, the third sub-prism 920 is a non-right-angled prism, the fourth sub-prism is a right-angled prism, and a beam splitting film 930 is disposed between the opposite surfaces of the third sub-prism 910 and the fourth sub-prism 920. The included angle a of the third sub-prism 910 is equal to included angle b of the fourth sub-prism 920.

In this implementation, the light is incident into the third sub-prism 910 through a surface 911. After passing through the beam splitting film 930, the light is split into the visible light and the near-infrared light. The near-infrared light exits from the third sub-prism 910 through a surface 913, and the visible light exits from the fourth sub-prism 920 through a surface 922. Of course, as described above, with the provision of the beam splitting film, the visible light can exit from the third sub-prism 910 through the surface 913 and the near-infrared light can exit from the fourth sub-prism 920 through the surface 922.

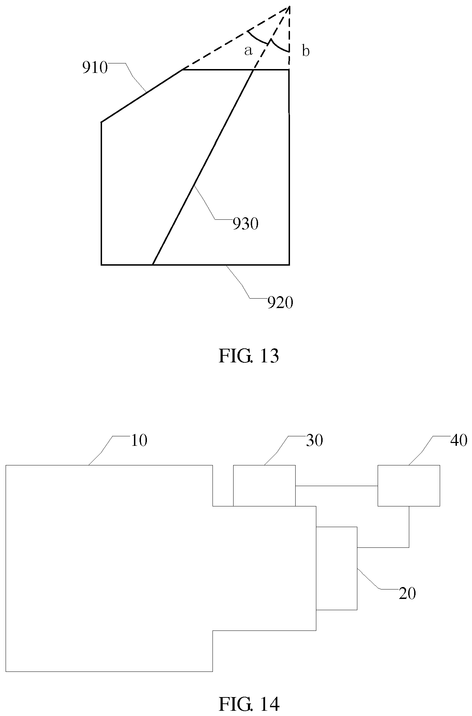

Of course, in order to reduce the volume of the prism, as another implementation, the third sub-prism 910 and the fourth sub-prism 920 may be partially cut off, and the cut-off beam splitting prism may be as shown in FIG. 13, and the dash line portion indicates the cut-off portion. In the implementation shown in FIG. 13, the third sub-prism 910 and the fourth sub-prism 920 are both non-right-angled prisms.

The camera lens with a beam splitting device in this solution can split the incident light into the visible light and the near-infrared light. In addition, the light passes through the group of variable magnification lenses and the group of compensation lenses before it is incident into the beam splitting device, so that the zoom and aberration correction can be achieved.

An embodiment of the present application further provides a camera, as shown in FIG. 14 , including the above-described camera lens 10, a visible light acquisition module 20, a near-infrared light acquisition module 30, and a fusion module 40. Wherein,
the camera lens 10 is configured for splitting mixed light into visible light and near-infrared light; wherein, the near-infrared light is emitted by an infrared fill lamp;
the visible light acquisition module 20 is configured for acquiring the visible light exiting from the camera lens 10, and includes a first photosensitive chip that converts the visible light into a color signal and a first brightness signal;
the near-infrared light acquisition module 30 is configured for acquiring the near-infrared light exiting from the camera lens 10, and includes a second photosensitive chip that converts the near-infrared light into a second brightness signal; and
the fusion module 40 is configured for fusing the color signal, the first brightness signal and the second brightness signal and outputting a fused image. The fused image is a color image with a higher brightness.

The above-described infrared fill lamp may be disposed in the camera or may be separately disposed, which is not limited herein. The infrared fill lamp is provided with a sensor switch. When the intensity of the visible light in a scene is lower than a preset threshold or when a preset period is reached, the sensor switch is closed and the infrared fill lamp emits the near-infrared light. The spectral center wavelength of the near-infrared light emitted by the infrared fill lamp is 850 nm, 780 nm or 730 nm and the like, which is not limited herein.

The camera provided with a camera lens in the solution can realize the separation of the visible light and the infrared light. The camera is further provided with a visible light acquisition module for acquiring the visible light exiting from the camera lens and converting the visible light into a color signal and a first brightness signal. The camera is further provided with a near-infrared light acquisition module for acquiring the near-infrared light exiting from the camera lens and converting the near-infrared light into a second brightness signal. The camera is further provided with a fusion module for fusing the color signal, the first brightness signal and the second brightness signal and outputting a fused image. It can be seen that the camera provided by the solution separately processes and then fuses the visible light and the near-infrared light, thereby avoiding color cast during the mixture of the visible light and the near-infrared light. Therefore, a color image may be output under a low illumination scene.

It should be noted that the relationship terms used herein, such as "first", "second" and the like are only used to distinguish one entity or operation from another entity or operation, but do not necessarily require or imply that there is an actual relationship or order between these entities or operations. Moreover, the terms "include", "comprise", or any variants thereof are intended to cover a non-exclusive inclusion, such that processes, methods, articles, or devices, including a series of elements, include not only those elements that have been listed, but also other elements that is not specifically listed or the elements intrinsic to these processes, methods, articles, or devices. Without further limitations, elements defined by the wording "comprise(s) a/an..." do not exclude additional identical elements in the processes, methods, articles, or devices that includes the listed elements.

All of the embodiments in the description are described in a correlated manner, and identical or similar parts in various embodiments can refer to one another. In addition, the description for each embodiment focuses on the differences from other embodiments. In particular, the embodiment of the device is described briefly, since it is substantially similar to the embodiment of the method, and the related contents can refer to the description of the embodiment of the method.

It can be understood by those with ordinary skills in the art that all or a part of steps in the implementations of the above method can be accomplished by instructing related hardware through programs, which can be stored in a computer-readable storage medium, such as in ROM/RAM, a disk, an optical disk, and so on.

The embodiments described above are only preferable embodiments of the present application, and are not intended to limit the present application. Any modifications, alternatives, improvements, or the like made within the spirit and principle of the present application shall be included within the protection scope of the present application.

## Claims

1. A camera lens, comprising a group of variable magnification lenses, a group of compensation lenses and a beam splitting device sequentially arranged, or, a group of compensation lenses, a group of variable magnification lenses and a beam splitting device sequentially arranged; wherein,
the group of variable magnification lenses has a negative focal power and is configured for diverging light incident from outside;
the group of compensation lenses has a positive focal power and is configured for converging light exiting from the group of variable magnification lenses; and
the beam splitting device is configured for splitting the light exiting from the group of compensation lenses into visible light and near-infrared light.

2. The camera lens of claim 1, wherein, a first group of fixed lenses is further disposed between the group of variable magnification lenses and the group of compensation lenses, and has a positive focal power;
in the case where the camera lens comprises the group of variable magnification lenses, the group of compensation lenses and the beam splitting device sequentially arranged, the first group of fixed lenses is configured for converging the light exiting from the group of variable magnification lenses, and the converged light is incident into the group of compensation lenses;
in the case where the camera lens comprises the group of compensation lenses, the group of variable magnification lenses and the beam splitting device sequentially arranged, the first group of fixed lenses is configured for converging the light exiting from the group of compensation lenses, and the converged light is incident into the group of variable magnification lenses.

3. The camera lens of claim 1 or 2, wherein, a second group of fixed lenses is further disposed before the group of variable magnification lenses, and has a positive focal power; a third group of fixed lenses is further disposed before the group of compensation lenses, and has a positive focal power;
in the case where the camera lens comprises the group of variable magnification lenses, the group of compensation lenses and the beam splitting device sequentially arranged:
the second group of fixed lenses is configured for converging the light incident from outside, and the converged light is incident into the group of variable magnification lenses;
the third group of fixed lenses is configured for converging the light exiting from the group of variable magnification lenses, and the converged light is incident into the group of compensation lenses;
in the case where the camera lens comprises the group of compensation lenses, the group of variable magnification lenses and the beam splitting device sequentially arranged:
the second group of fixed lenses is configured for converging the light exiting from the group of compensation lenses, and the converged light is incident into the group of variable magnification lenses;
the third group of fixed lenses is configured for converging the light incident from outside, and the converged light is incident into the group of compensation lenses.

4. The camera lens of claim 1, wherein, the beam splitting device is a beam splitting prism or a beam splitting filter;
the beam splitting prism comprises a first sub-prism and a second sub-prism; wherein, the first sub-prism and the second sub-prism are right-angled prisms, a first inclined surface of the first sub-prism is opposite to a second inclined surface of the second sub-prism, and a beam splitting film is disposed between the first inclined surface and the second inclined surface;
the light exiting from the group of compensation lenses is incident into the first sub-prism through a first right-angle surface, and is split into the visible light and the near-infrared light after passing through the beam splitting film; the near-infrared light exits from the first sub-prism through a second right-angle surface, and the visible light exits from the second sub-prism through a third right-angle surface; or, the visible light exits from the first sub-prism through the second right-angle surface, and the near-infrared light exits from the second sub-prism through the third right-angle surface.

5. The camera lens of claim 4, wherein, in the case where the beam splitting device is the beam splitting prism, the near-infrared light exits from the first sub-prism through the second right-angle surface, and the visible light exits from the second sub-prism through the third right-angle surface,
a first anti-reflection film is further disposed on the first right-angle surface; the light exiting from the group of compensation lenses is transmitted through the first anti-reflection film, and is incident into the first sub-prism through the first right-angle surface;
and/or, a second anti-reflection film is further disposed on the second right-angle surface; the near-infrared light is transmitted through the second anti-reflection film, and exits from the first sub-prism through the second right-angle surface;
and/or, a third anti-reflection film is further disposed on the third right-angle surface; the visible light is transmitted through the third anti-reflection film, and exits from the second sub-prism through the third right-angle surface;
in the case where the beam splitting device is the beam splitting prism, the near-infrared light exits from the first sub-prism through the second right-angle surface, and the visible light exits from the second sub-prism through the third right-angle surface,
a first anti-reflection film is further disposed on the first right-angle surface; the light exiting from the group of compensation lenses is transmitted through the first anti-reflection film, and is incident into the first sub-prism through the first right-angle surface;
and/or, a third anti-reflection film is further disposed on the second right-angle surface; the visible light is transmitted through the third anti-reflection film, and exits from the first sub-prism through the second right-angle surface;
and/or, a second anti-reflection film is further disposed on the third right-angle surface; the near-infrared light is transmitted through the second anti-reflection film, and exits from the second sub-prism through the third right-angle surface.

6. The camera lens of claim 1, wherein, the beam splitting device is a beam splitting prism, which comprises a third sub-prism and a fourth sub-prism; wherein, the third sub-prism is a non-right-angled prism, the fourth sub-prism is a right-angled prism or a non-right-angled prism, and a beam splitting film is disposed between the opposite surfaces of the third sub-prism and the fourth sub-prism.

7. The camera lens of claim 1, wherein, the camera lens is further provided with a first interface and a second interface; the split near-infrared light exits from the camera lens through the first interface, and the split visible light exits from the camera lens through the second interface; or, the visible light exits from the camera lens through the first interface, and the near-infrared light exits from the camera lens through the second interface.

8. A camera, comprising a camera lens of any one of claims 1-7, a visible light acquisition module, a near-infrared light acquisition module and a fusion module; wherein,
the camera lens is configured for splitting mixed light into visible light and near-infrared light; wherein, the near-infrared light is emitted by an infrared fill lamp;
the visible light acquisition module is configured for acquiring the visible light exiting from the camera lens; the visible light acquisition module comprises a first photosensitive chip, which converts the visible light into a color signal and a first brightness signal;
the near-infrared light acquisition module is configured for acquiring the near-infrared light exiting from the camera lens; the near-infrared light acquisition module comprises a second photosensitive chip, which converts the near-infrared light into a second brightness signal;
the fusion module is configured for fusing the color signal, the first brightness signal and the second brightness signal, and outputting a fused image.

9. The camera of claim 8, wherein, the infrared fill lamp is disposed in the camera, and a sensor switch is disposed in the infrared fill lamp; when an intensity of the visible light in a scene is lower than a preset threshold or when a preset period is reached, the sensor switch is closed and the infrared fill lamp emits the near-infrared light.

10. The camera of claim 9, wherein, a spectral center wavelength of the near-infrared light emitted by the infrared fill lamp is 850 nm, 780 nm or 730 nm.
